# EUROPÄISCHE PATENTANMELDUNG

(11) **EP 2 752 633 A2**
(43) Veröffentlichungstag der Anmeldung: **09.07.2014**
(21) Anmeldenummer: 14000043.1
(22) Anmeldetag: 07.01.2014
(51) Int. Cl.: F25D 27/00

(54) **Kühl- und/oder Gefriergerät**

(30) Priorität: 07.01.2013 DE 102013000195
(71) Anmelder: Liebherr-Hausgeräte Ochsenhausen GmbH, 88416 Ochsenhausen (DE)
(72) Erfinder: Schmid, Helmut, 9821 Obervellach (AT); Schubert, Ralf, 88447 Warthausen (DE)
(74) Vertreter: Herrmann, Uwe

(57) **Zusammenfassung**

Die vorliegende Erfindung betrifft ein Kühl- und/oder Gefriergerät mit wenigstens einem gekühlten Innenraum und mit wenigstens einem Beleuchtungsmittel, wobei das Beleuchtungsmittel mindestens ein gemäß der Field-Induced Polymer Elektrolumineszenz arbeitendes Beleuchtungsmittel ("FIPEL-Beleuchtungsmittel") umfaßt oder durch ein solches Beleuchtungsmittel gebildet wird.

## Beschreibung

Die vorliegende Erfindung betrifft ein Kühl- und/oder Gefriergerät mit wenigstens einem gekühlten Innenraum und mit wenigstens einem Beleuchtungsmittel.

Aus dem Stand der Technik bekannte Kühl- und/oder Gefriergeräte weisen in ihrem gekühlten Innenraum üblicherweise wenigstens ein Beleuchtungsmittel, z. B. in Form einer Glühbirne auf, um den Innenraum zumindest teilweise auszuleuchten. Außer der Verwendung herkömmlicher Glühbirnen ist es des Weiteren bekannt, zur Ausleuchtung der Innenräume von Kühl- bzw. Gefriergeräten sogenannte OLEDs, d.h. organische Leuchtdioden einzusetzen. Ein Nachteil von OLEDs besteht in deren vergleichsweise komplexen Aufbau.

Der vorliegenden Erfindung liegt daher die Aufgabe zugrunde, ein Kühl- und/oder Gefriergerät der eingangs genannten Art dahingehend weiterzubilden, dass die Beleuchtungsmittel vergleichsweise einfach aufgebaut sind und dennoch eine gute Aus- bzw. Beleuchtung gewährleisten.

Diese Aufgabe wird durch ein Kühl- und/oder Gefriergerät mit den Merkmalen des Anspruchs 1 gelöst. Danach ist vorgesehen, dass das Beleuchtungsmittel wenigstens ein Beleuchtungsmittel umfasst oder durch wenigstens ein Beleuchtungsmittel gebildet wird, das gemäß der Technologie der feldinduzierten elektrolumineszenten Polymere arbeitet bzw. Licht abgibt. Diese Beleuchtungsmittel werden im Rahmen der vorliegenden Erfindung als "FIPEL-Beleuchtungsmittel" bezeichnet.

Der vorliegenden Erfindung liegt somit der Gedanke zugrunde, ein Kühl- und/oder Gefriergerät mit wenigstens einem Beleuchtungsmittel auszustatten, das mit der FIPEL-Beleuchtungstechnik arbeitet. Dabei handelt es sich - wie ausgeführt - um die Technologie der feldinduzierten elektrolumineszenten Polymere. Diese Beleuchtungsmittel bestehen üblicherweise aus mehreren Schichten elektrisch leitfähigen Kunststoffes, der mit einer kleinen Menge von Nanopartikeln versetzt ist.

Bei dem Kunststoff kann es sich um Polyvinylcarbazol handeln.

Werden diese Nanopartikel vorzugsweise durch AC-Feld elektrisch in Schwingung versetzt, erzeugen sie Licht oder verstärken das seitens des Polymers abgegebene Licht, beispielsweise weißes Licht, so dass eine Verwendung als Beleuchtungsmittel möglich ist.

In einer bevorzugten Ausgestaltung der Erfindung entspricht die Lichttemperatur des durch das FIPEL-Beleuchtungsmittel abgegebenen Lichtes der des natürlichen Sonnenlichtes oder ist dieser sehr ähnlich.

Dieses Licht wird vom menschlichen Auge im Gegensatz zu dem üblicherweise kalten Licht von Energiesparbirnen als angenehm empfunden.

Die vorliegende Erfindung ist jedoch nicht auf FIPEL-Beleuchtungsmittel beschränkt, die weißes Licht abgeben, sondern umfasst jede beliebige Beleuchtungsfarbe.

In bevorzugter Ausgestaltung der Erfindung ist vorgesehen, dass das wenigstens eine FIPEL-Beleuchtungsmittel derart angeordnet ist, dass es den Innenraum des Kühl- und/oder Gefriergerätes teilweise oder vollständig beleuchtet. Es kann dort ausschließlich oder auch zusätzlich zur herkömmlichen Beleuchtungsmitteln eingesetzt werden und dient dazu, den gekühlten Innenraum teilweise oder vollständig auszuleuchten, so dass das darin befindliche Kühl- bzw. Gefriergut besonders gut erkennbar ist.

Alternativ oder zusätzlich können auch bestimmte graphische Elemente, Logos, Schriftzüge etc. im gekühlten Innenraum oder auch auf der Außenseite des Gerätes durch das oder die FIPEL-Beleuchtungsmittel gebildet oder be- oder hinterleuchtet werden.

In einer weiteren Ausgestaltung der Erfindung ist vorgesehen, dass das FIPEL-Beleuchtungsmittel so angeordnet ist, dass es die Außenhaut des Kühl- und/oder Gefriergerätes teilweise oder vollständig beleuchtet und/oder dass es die Umbebung des Gerätes teilweise oder vollständig beleuchtet.

Die vorliegende Erfindung ist somit nicht auf die Anwendung, der FIPEL-Beleuchtungsmittel zur Innenraumbeleuchtung beschränkt, sondern kann auch zur Beleuchtung der Außenseite bzw. der Umgebung des Gerätes dienen und beispielsweise als Effektbeleuchtung besondere Aufmerksamkeit von Kunden bzw. Nutzern hervorrufen.

In einer weiteren Ausgestaltung der Erfindung ist vorgesehen, dass das FIPEL-Beleuchtungsmittel an oder in der Innenwand des Gerätes angeordnet ist, die den gekühlten Innenraum umgibt und/oder dass das FIPEL-Beleuchtungsmittel an oder in der sichtbaren Seite der Außenwand des Gerätes angeordnet ist.

Denkbar ist es beispielsweise, dass das Gerät einen Innenbehälter sowie eine Innenseite der Tür, des Deckels oder eines sonstigen Verschlusselementes aufweist, die zusammen mit dem Innenbehälter den gekühlten Innenraum begrenzt. Das FIPEL-Beleuchtungsmittel kann nun an einer oder mehreren Seiten des Innenbehälters bzw. an der Innenseite des Verschlusselementes angeordnet sein oder auch in dieses integriert sein. Denkbar ist es beispielsweise, das FIPEL-Beleuchtungsmittel an der Rückseite des Innenbehälters und/oder an der Decke und/oder an der oder den Seitenwänden und/oder bodenseitig am Innenbehälter und/oder an der Innenseite des Verschlusselementes anzuordnen.

Es kann auf der Wandung des Innenbehälters bzw. der Innenseite des Verschlusselementes aufsitzen bzw. dort durch geeignete Befestigungsmittel fixiert sein oder auch in dieses integriert sein.

Alternativ oder zusätzlich dazu ist es denkbar, dass das FIPEL-Beleuchtungsmittel an oder in der Außenwand des Gerätes angeordnet ist. Auch dort kann es aufgesetzt sein oder auch in die Außenhülle des Gerätes, wie beispielsweise in die Tür und/oder in die Seitenwandungen etc. integriert sein.

Die vorliegende Erfindung ist jedoch nicht darauf beschränkt, das FIPEL-Beleuchtungsmittel an oder in einer Innen- bzw. Außenwand des Gerätes anzuordnen. Alternativ oder zusätzlich ist es denkbar, Einbauteile, wie beispielsweise Ablageböden, Schubfächer, Türabsteller etc. mit einem oder mehreren dieser Beleuchtungsmittel zu versehen und/oder auch Anbauteile, wie beispielsweise den Türgriff, Stellfüße etc. So ist es möglich, beispielsweise einen Ablageboden mit wenigstens einem FIPEL-Beleuchtungsmittel auszurüsten, um eine besonders gute Beleuchtung bzw. Ausleuchtung des gekühlten Innenraums zu erzielen.

Denkbar ist es beispielsweise auch, den Türgriff zu beleuchten, damit dieser durch den Nutzer bei abgedunkelten Räumen gut erkennbar ist bzw. um einen besonders ansprechenden optischen Gesamteindruck zu erzielen,

Denkbar ist es, dass das FIPEL-Beleuchtungsmittel einen Teil der Innenwand des Gerätes und/oder der Außenwand des Gerätes und/oder einen Teil eines Einbauoder Anbauteils des Gerätes bildet. So ist es beispielsweise denkbar, dass die Außenwand teilweise oder vollständig durch ein FIPEL-Beleuchtungsmittel gebildet wird. Dies kann entsprechend für eine Wandung oder für alle Wandungen des Innenbehälters, der Innenseite der Tür oder auch für eine oder mehrere oder alle Wandungen von Einbau- oder Anbauteilen gelten.

So ist es beispielsweise denkbar, die Rückseite des Innenbehälters durch ein FIPEL-Beleuchtungsmittel zu bilden und dieses nicht auf die eigentliche Innenbehälterwandung aufzubringen. In diesem Fall wird somit zumindest eine Wandung des Innenbehälters durch das Beleuchtungsmittel selbst gebildet. Dies gilt entsprechend natürlich auch für andere Wandungen des Innenbehälters, der Innenseite des Verschlusselementes oder auch der Außenhaut bzw. für eine oder mehrere Wandungen von Einbau- oder Anbauteilen.

Im Falle des Innenbehälters oder auch der Außenhaut ist es somit denkbar, dass das FIPEL-Beleuchtungsmittel einseitig an die Ausschäumung angrenzt, die sich zwischen dem Innenbehälter bzw. zwischen der Innenseite der Tür und der Außenhaut erstreckt.

In weiterer Ausgestaltung der Erfindung ist vorgesehen, dass das FIPEL-Beleuchtungsmittel zwischen wenigstens zwei transparenten Platten angeordnet ist oder an wenigstens eine transparente Platte angrenzt. Denkbar ist es beispielsweise, einen Ablageboden derart auszuführen, dass dieser eine obere transparente Platte und eine untere transparente Platte aufweist, und dazwischen das wenigstens eine FIPEL-Beleuchtungsmittel anzuordnen. Die transparenten Platten können beispielsweise aus Kunststoff oder auch aus Glas bestehen.

Eine solche Ausführungsform hat den Vorteil, dass ausgehend von dem Trageboden Licht nach oben und nach unten abgegeben werden kann, wodurch eine besonders gute Ausleuchtung des gekühlten Innenraums möglich ist. Auch ist es denkbar, nur eine transparente Platte, wie beispielsweise eine Glas- oder Kunststoffplatte an das FIPEL-Beleuchtungsmittel anzugrenzen. Denkbar ist es beispielsweise, das FIPEL-Beleuchtungsmittel unter einem vorzugsweise transparenten Trageboden oder an der Rückseite oder einer anderen Wandung des Innenbehälters anzubringen und mit einer transparenten Platte zu verkleiden, um einen besonders ansprechenden optischen Effekt zu erzielen bzw. um eine besonders gute Ausleuchtung des gekühlten Innenraums zu erreichen.

Die transparente Platte kann so ausgeführt sein, dass sie eine bestimmte Lichtverteilung fördert bzw. vornimmt, um eine optimale Ausleuchtung zu erzielen.

Abgesehen davon kann das wenigstens eine FIPEL-Beleuchtungsmittel mit einem oder mehreren Lichtleitelement(en), wie beispielsweise Linsen, Reflektoren, etc. derart gekoppelt sein, dass das von dem FIPEL-Beleuchtungsmittel ausgehende Licht entsprechend gelenkt wird.

In weiterer Ausgestaltung der Erfindung ist vorgesehen, dass an oder in dem Gerät genau ein oder auch mehrere FIPEL-Beleuchtungsmittel vorgesehen sein.

Denkbar ist es, dass das wenigstens eine FIPEL-Beleuchtungsmittel so ausgebildet ist, dass es weißes Licht abgibt, vorzugsweise mit der Lichttemperatur des natürlichen Tageslichts.

Auch ist es denkbar, dass das wenigstens eine FIPEL-Beleuchtungsmittel derart ausgebildet ist, dass es Licht unterschiedlicher Farben emittieren kann. Ebenso ist es denkbar, dass mehrere FIPEL-Beleuchtungsmittel vorgesehen sind, die Licht unterschiedlicher Farben emittieren. So ist es beispielsweise denkbar, im Falle von mehreren gekühlten Kompartimenten entsprechend unterschiedliche FIPEL-Beleuchtungsmittel vorzusehen, die Licht unterschiedlicher Lichtfarbe abgeben. So ist es beispielsweise möglich, das Kühlkompartiment mit weißem Licht zu beleuchten und das Gefrierkompartiment mit blauem Licht etc.

In weiterer Ausgestaltung der Erfindung ist vorgesehen, dass das FIPEL-Beleuchtungsmittel als flächiges Element, wie beispielsweise als Lichtmatte oderfolie ausgebildet ist. Diese Ausgestaltung der Erfindung ermöglicht eine besonders gute Ausleuchtung des gekühlten Innenraums, weil das Beleuchtungsmittel eine große Fläche aufweisen kann.

So ist es beispielsweise denkbar, dass sich das FIPEL-Beleuchtungsmittel flächig entlang einer oder mehrerer Wandungen des Innenbehälters oder der Innenseite des Verschlusselementes erstreckt. Vorzugsweise kann vorgesehen sein, dass wenigstens die Hälfte der Fläche des Innenbehälters und/oder der Innenverkleidung der Tür etc. mit einem FIPEL-Beleuchtungsmittel versehen ist, um eine besonders gute Ausleuchtung zu erreichen. Denkbar ist beispielsweise eine Ausführungsform, bei der die gesamte Rückwand und/oder die gesamte Deckenwand und/oder Bodenwand und/oder die gesamten Seitenwände mit einem oder mehreren FIPEL-Beleuchtungsmitteln versehen sind.

In weiterer Ausgestaltung der Erfindung ist vorgesehen, dass das FIPEL-Beleuchtungsmittel als punkt- oder linienförmige Lichtquelle ausgebildet ist. So ist es beispielsweise denkbar, am Innenbehälter Lichtsäulen vorzusehen, die vorzugsweise derart angeordnet sind, dass eine möglichst gleichmäßige Ausleuchtung des gekühlten Innenraums vorgenommen werden kann.

Das FIPEL-Beleuchtungsmittel kann mit einem Gewinde versehen sein, das dem herkömmlicher Glühbirnen entspricht. Auf diese Weise kann eine besonders einfache Umrüstung bestehender Kühl- bzw. Gefriergeräte vorgenommen werden.

In weiterer Ausgestaltung der Erfindung ist vorgesehen, dass das FIPEL-Beleuchtungsmittel zur Be- oder Hinterleuchtung einer Anzeige und/oder Bedieneinheit des Kühl- und/oder Gefriergerätes dient. Auch ist es denkbar, dass die Anzeige- und/oder Bedieneinheit ein oder mehrerer Symbole, wie Zahlen, Buchstaben etc. zur Anzeige bringen kann und dass diese Symbole teilweise oder vollständig durch FIPEL-Beleuchtungsmittel gebildet werden.

In weiterer Ausgestaltung der Erfindung ist vorgesehen, dass das FIPEL-Beleuchtungsmittel teilweise oder vollständig aus Kunststoff besteht und insbesondere kein Glas aufweist. Dies bringt den Vorteil mit sich, dass die Bruchgefahr gegenüber herkömmlichen Glühbirnen erheblich reduziert ist.

Der Kunststoff kann derart ausgebildet sein, dass er flexibel oder starr ist. Ist er flexibel, ist es denkbar, dass nutzerseitig eine bestimme Ausformung der Beleuchtungsmittel vorgenommen werden kann und vorzugsweise derart, dass eine für den Nutzer optimale Ausleuchtung des Innenraumes bzw. Beleuchtung des Gerätes möglich ist.

In weiterer Ausgestaltung der Erfindung ist vorgesehen, dass das FIPEL-Beleuchtungsmittel aus mehreren, vorzugsweise aus drei Schichten Kunststoff besteht, von denen wenigstens eine Nanopartikel enthält. Diese Nanopartikel sind vorzugsweise als Kohlenstoff-Nanotubes und insbesondere als Multi-Walled-Carbonanotubes (MWNTs) ausgebildet.

Als Kunststoff kommt beispielsweise Poly(N-vinylkarbazol) (PVK):fac-tris(2-phenylpyri-dine)iridium(III) [Ir(ppy)₃] in Betracht.

Die Stromversorgung des FIPEL-Beleuchtungsmittels erfolgt vorzugsweise mit einer AC-Stromquelle.

Werden die FIPEL-Beleuchtungsmittel mit einer AC-Stromquelle verbunden bzw. mit Wechselspannung betrieben, führt dies zu einer Emission von Licht, wobei angenommen wird, dass Elektronen das elektrolumineszente Polymer zur Lichtemission anregen und die Kohlenstoff-Nanotubes oder sonstige Nanopartikel eine Verstärkung des emittierten Lichtes vornehmen.

Ein Vorteil der FIPEL-Technologie besteht darin, dass die entsprechenden Beleuchtungsmittel vergleichsweise einfach herzustellen sind, langlebig sind und außerordentlich wenig Wärme abgeben, was insbesondere bei Einsatz in Kühl- und/oder Gefriergeräten von besonderem Vorteil ist.

Weitere Einzelheiten und Vorteile der Erfindung werden anhand eines im Folgenden beschriebenen Ausführungsbeispiels näher erläutert:
Das Ausführungsbeispiel betrifft ein Kühl- und/oder Gefriergerät, das einen Innenbehälter aufweist, der zusammen mit der Innenseite eines Verschlusselementes, wie beispielsweise einer Tür, einen gekühlten Innenraum begrenzt. In dem gekühlten Innenraum befinden sich eine Mehrzahl von Ablageböden und/oder Schubfächern sowie an der Innenseite des Verschlusselementes ein oder mehrere Türabsteller.

Um eine möglichst gute Ausleuchtung des gekühlten Innenraums zu erreichen, befinden sich am Innenbehälter ein oder mehrere FIPEL-Beleuchtungsmittel, die flächig ausgeführt sein können und jeweils mehr als die Hälfte der jeweiligen Fläche des Innenbehälters bzw. Innenseite der Tür einnehmen können.

Diese Beleuchtungsmittel können beispielsweise an der Rückseite, an der Bodenseite, an der Oberseite oder an der Seitenwand oder an mehreren der vorgenannten Wände des Innenbehälters angeordnet sein, um eine gute Ausleuchtung des gekühlten Innenraums zu erreichen.

Auch eine Anordnung an der Türinnenwand ist denkbar.

Denkbar ist es, die FIPEL-Beleuchtungsmittel so auszuführen, dass sie durch einen Nutzer positionierbar sind, so dass dieser selbst die Beleuchtungssituation wählen kann.

Die FIPEL-Beleuchtungsmittel können auf die jeweiligen Wandungen aufgebracht werden, wie beispielsweise aufgeklebt werden oder in diese integriert sein. Denkbar ist es auch, dass die Wandungen zumindest teilweise durch die FIPEL-Beleuchtungsmittel selbst gebildet werden. Ein Aufbringen der FIPEL-Beleuchtungsmittel auf ein Substrat in Form einer Wandung ist in diesem Fall nicht mehr erforderlich, da die entsprechenden Abschnitte der Wandungen durch das Beleuchtungsmittel selbst ausgebildet werden.

Alternativ oder zusätzlich zu dieser Anordnung ist es denkbar, ein oder mehrere der Einbauelemente, die sich in dem gekühlten Innenraum befinden, wie beispielsweise Ablageböden oder Schubfächer mit einem oder mehreren der FIPEL-Beleuchtungsmittel auszustatten. So ist es denkbar, transparente Böden, die beispielsweise aus Glas oder Kunststoff bestehen können, mit einem oder mehreren FIPEL-Beleuchtungsmitteln auszustatten. Denkbar ist beispielsweise eine Sandwich-Bauweise, bei der zwischen zwei transparenten Böden das oder die FIPEL-Beleuchtungsmittel angeordnet sind, und zwar derart, dass sie Licht nach oben und nach unten abgeben, um eine möglichst gute Ausleuchtung des gekühlten Innenraums zu erreichen.

Die FIPEL-Beleuchtungsmittel werden mit einer AC-Spannungsquelle betrieben.

Wie bereits oben ausgeführt, können diese aus mehreren Schichten iridiumhaltigen Polymers bestehen, das mit Multi-Walled-Carbonanotubes oder mit anderen Nanopartikeln gedopt sein kann.

Denkbar ist es, dass zwischen den Schichten des gedopten Polymers dielektrischen Schichten sandwichartig eingebracht sind.

Der Vorteil der erfindungsgemäßen Beleuchtungsmittel besteht u. a. in einer guten Lichtausbeute, der Möglichkeit, beliebige Formen und Lichtfarben herzustellen sowie darin, dass die Beleuchtungsmittel vergleichsweise einfach herstellbar sind und darüber hinaus sehr wenig Wärme abgeben.

## Patentansprüche

1. Kühl- und/oder Gefriergerät mit wenigstens einem gekühlten Innenraum und mit wenigstens einem Beleuchtungsmittel, **dadurch gekennzeichnet, dass** das Beleuchtungsmittel mindestens ein gemäß der Field-Induced Polymer Elektrolumineszenz arbeitendes Beleuchtungsmittel ("FIPEL-Beleuchtungsmittel") umfaßt oder durch ein solches Beleuchtungsmittel gebildet wird.

2. Kühl- und/oder Gefriergerät nach Anspruch 1, **dadurch gekennzeichnet, dass** das FIPEL-Beleuchtungsmittel derart angeordnet ist, dass es den Innenraum des Kühl- und/oder Gefriergerätes teilweise oder vollständig beleuchtet.

3. Kühl- und/oder Gefriergerät nach Anspruch 1 oder 2, **dadurch gekennzeichnet, dass** das FIPEL-Beleuchtungsmittel derart angeordnet ist, dass es die Außenseite des Kühl- und/oder Gefriergerätes und/oder die Umgebung des Kühl- und/oder Gefriergerätes teilweise oder vollständig beleuchtet.

4. Kühl- und/oder Gefriergerät nach einem der vorhergehenden Ansprüche, **dadurch gekennzeichnet, dass** das FIPEL-Beleuchtungsmittel an oder in der Innenwand des Gerätes angeordnet ist, die den gekühlten Innenraum des Kühl- und/oder Gefriergerätes umgibt, und/oder dass das FIPEL-Beleuchtungsmittel an oder in der Außenwand des Kühl- und/oder Gefriergerätes angeordnet ist.

5. Kühl- und/oder Gefriergerät nach einem der vorhergehenden Ansprüche, **dadurch gekennzeichnet, dass** das FIPEL-Beleuchtungsmittel an oder in wenigstens einem Einbauteil, insbesondere an oder in einem Türabsteller, Ablageboden oder Schubfach und/oder an oder in wenigstens einem Anbauteil, insbesondere an oder in dem Griff des Kühl- und/oder Gefriergerätes angeordnet ist.

6. Kühl- und/oder Gefriergerät nach einem der vorhergehenden Ansprüche, **dadurch gekennzeichnet, dass** das FIPEL-Beleuchtungsmittel einen Teil der Innenwand und/oder der Außenwand und/oder einen Teil eines Einbau- oder Anbauteils des Kühl- und/oder Gefriergerätes bildet.

7. Kühl- und/oder Gefriergerät nach einem der vorhergehenden Ansprüche, **dadurch gekennzeichnet, dass** das FIPEL-Beleuchtungsmittel zwischen wenigstens zwei transparenten Platten angeordnet ist oder an wenigstens eine transparente Platte angrenzt.

8. Kühl- und/oder Gefriergerät nach einem der vorhergehenden Ansprüche, **dadurch gekennzeichnet, dass** genau ein oder mehrere FIPEL-Beleuchtungsmittel vorgesehen sind und/oder dass das FIPEL-Beleuchtungsmittel derart ausgebildet ist, dass es ausschließlich oder unter anderem weißes Licht abgibt.

9. Kühl- und/oder Gefriergerät nach einem der vorhergehenden Ansprüche, **dadurch gekennzeichnet, dass** das FIPEL-Beleuchtungsmittel derart ausgebildet ist, dass es Licht unterschiedlicher Farben emittieren kann und/oder dass mehrere FIPEL-Beleuchtungsmittel vorgesehen sind, die Licht gleicher oder unterschiedlicher Farben emittieren.

10. Kühl- und/oder Gefriergerät nach einem der vorhergehenden Ansprüche, **dadurch gekennzeichnet, dass** das FIPEL-Beleuchtungsmittel als flächiges Element und vorzugsweise als Lichtmatte oder -folie oder als punkt- oder linienförmige Lichtquelle ausgebildet ist.

11. Kühl- und/oder Gefriergerät nach einem der vorhergehenden Ansprüche, **dadurch gekennzeichnet, dass** das FIPEL-Beleuchtungsmittel mit einem Gewinde versehen ist, mittels dessen es in eine Fassung des Kühl- und/oder Gefriergerätes eingeschraubt ist.

12. Kühl- und/oder Gefriergerät nach einem der vorhergehenden Ansprüche, **dadurch gekennzeichnet, dass** das Kühl- und/oder Gefriergerät wenigstens eine Anzeige- und/oder Bedieneinheit aufweist und dass das FIPEL-Beleuchtungsmittel derart angeordnet und ausgebildet ist, dass es die Anzeige- und/oder Bedieneinheit beleuchtet oder hinterleuchtet und/oder dass das FIPEL-Beleuchtungsmittel wenigstens ein Symbol bildet, das mittels der Anzeige- und/oder Bedieneinheit darstellbar ist.

13. Kühl- und/oder Gefriergerät nach einem der vorhergehenden Ansprüche, **dadurch gekennzeichnet, dass** das FIPEL-Beleuchtungsmittel teilweise oder vollständig aus Kunststoff besteht und/oder kein Glas aufweist.

14. Kühl- und/oder Gefriergerät nach einem der vorhergehenden Ansprüche, **dadurch gekennzeichnet, dass** das FIPEL-Beleuchtungsmittel aus wenigstens einer, vorzugsweise aus mehreren und besonders bevorzugt aus drei Schichten Kunststoff besteht, von denen wenigstens eine Nanopartikel enthält, wobei es sich bei den Nanopartikeln vorzugsweise auch oder ausschließlich um Kohlenstoff-Nanotubes handelt.
